# EUROPEAN PATENT SPECIFICATION

(11) **EP 0 455 252 B1**
(45) Date of publication and mention of the grant of the patent: **17.03.1999**
(21) Application number: 91107156.1
(22) Date of filing: 03.05.1991
(51) Int. Cl.: H04B 1/38

(54) **A radio unit for a telephone set**
Funkeinheit für Teilnehmergerät
Unité radio pour poste téléphonique

(30) Priority: 04.05.1990 FI 902262
(43) Date of publication of application: 06.11.1991
(73) Proprietor: NOKIA MOBILE PHONES LTD., 21530 Salo (FI)
(72) Inventor: Heinonen, Ari, SF-21530 Paimio (FI); Lajunen, Ari-Pekka, SF-24130 Salo (FI); Malmi, Kalevi, SF-24240 Salo (FI); Virkkunen, Jorma, SF-24240 Salo (FI)
(74) Representative: Johansson, Folke Anders

(56) References cited:
- GB-A- 2 184 308
- US-A- 4 593 409
- US-A- 4 673 861

## Description

The invention relates to a radio unit for a radio telephone set wherein said radio unit is interconnected with at least one disconnectable phone module.

Cellular or mobile phones are, for various uses, comprised of different combinations of a radio unit and a phone module. A mobile phone, a portable phone, a hand-portable phone and a mobile phone with separate battery, for example, are involved. A mobile phone with a separate battery is called a bag phone. In certain types of telephones a number of similar batteries with similar voltage limits can be used. The prior art radio telephone can also identify the difference in whether the phone element uses its own battery or if the phone is fed by an external power supply.

Patent application EP 90304320.6 published on October 24, 1990 (thus falling under Article 54(3) EPC) with the number 394074 discloses a method and apparatus for determining the battery type and for modifying operating characteristics accordingly.

US patent 4 593 409 discloses a transceiver protection arrangement in which a battery pack or an antenna attached to the transceiver provides information to the transceiver about certain parameters for determining whether the attached battery pack or antenna is appropriate. An alert is provided to the user if the attached battery pack or antenna is inappropriate. The information is stored in the battery pack or antenna (in a ROM provided therein). Providing an extra memory and storing a lot of information in the battery pack or antenna makes it more complicated.

The diversity of different combinations, as well as the costs entailed by a smaller serial production and a larger number of production lines, respectively, are a drawback in the present cellular phone production.

Bearing this in mind, the present invention goes further with respect to the above mentioned EP specification, more particularly with the aim of identifying not merely the battery type but the type of module connected to the central radio unit.

This object is achieved by the features of Claim 1. Other preferred embodiments are set forth in the dependent claims.

According to the invention, the same radio unit and the related software can be used in connection with different types of cellular phones. The radio unit identifies in conjunction with the start-up what kind of a phone is connected thereto at any given time. Basing on this definition carried out preferably by a microprocessor program of the radio unit, the radio unit selects an appropriate operating state and appropriate user features, such as the selection of the radio power, the deep discharge characteristics of the battery, the illumination of the telephone display and keyboard, automatic power switch-off, etc.

The invention makes it possible to produce a single common radio unit for different types of phones, thereby decreasing the production costs owing to increased serial production and a smaller number of production lines.

Different types of batteries, such as NiCd and lead gelatin accumulators with diverging allowable voltage limits, can, depending on the case, be coupled to the same radio unit by the method according to the invention. The voltage limits and the user features of different types of batteries are preferably specified in the software.

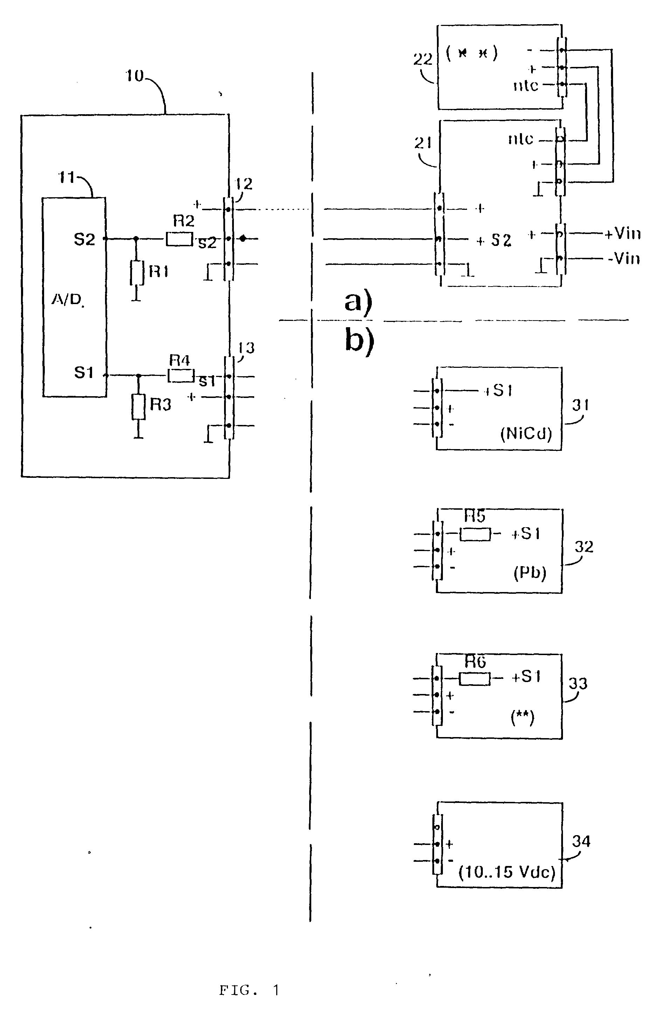

The invention will be described in greater detail in the following with the aid of an exemplary embodiment with reference to the appended drawing, which illustrates the radio unit and the current feed elements of the phone elements alternatively connected thereto.

The figure illustrates only those radio telephone elements which are essential from the point of view of the invention. A cellular radio telephone is used as an example here. According to embodiments of the invention, radio unit 10 is provided with current feed connections 12 and 13, which comprise connections to the supply voltage (+) and to the ground (-), respectively, and identification connections s1, s2. The radio unit is further provided with an analog/digital converter 11, which converts the analog signals S1, S2 of the identification inputs into a digital signal, which is conducted to the microprocessor (not shown) controlling the radio telephone. It is assumed in this connection that the rest of the cellular phone elements are familiar to professionals in the field, and have thus not been explained here in more detail.

The interface where, depending on the case, a different telephone module is coupled to the radio unit according to the invention is illustrated in the figure with a vertical dashed line. On the right in the figure alternative phone modules are shown, essentially only the current input elements thereof.

In section a) of the figure current input element 21 is shown, which operates the internal power supply 22, in this case a NiCd accumulator, of the telephone. An external current input connection (+Vin/-Vin) can be coupled to charger unit 21. Such a unit 21, 22 can be used in a portable phone, where the current input is connected from the battery/charger unit 22, 21 to connection 12 of the radio unit, which also has an identification line s2. Identification signal 52 from connection 12 is in this case the supply voltage (+).

In section b) of the figure there are phone modules which use an external power supply of the phone, for example in a mobile phone or a bag phone. Of these unit 34, the separate power supply 10...15 V, are coupled in the same manner as 31-33 to connection 13 of the radio unit.

The current input units 31-33 include e.g. different batteries, from which identification signal S1 is conducted, depending on the case, to connection 13 either directly from the supply voltage, or via resistor R5, R6. Unit 31 accomodates a NiCd accumulator, unit 32 accomodates a lead gelatin accumulator, and unit 33 has an optional accumulator/battery alternative indicated by the symbol (**).

Identification signal S1 and S2 is conducted from identification lines sl, s2 of connections 12, 13, to A/D converter 11, by which the radio unit identifies the kind of cellular phone it is operating in. This example comprises two connections arranged thereto, whereby identification lines sl, s2 can be aligned to sensitivities corresponding to different current input groups a) and b).

The user features associated with the phone and battery types have been preprogrammed into the memory of the control element (not shown) in the radio unit. The selection of the radio power, the deep discharge characteristic of the battery, the illumination of the display and keyboard (on/off), automatic power switch-off, etc. could be mentioned as examples of the user features. The battery types and the corresponding voltage limits in question are preferably fed to the memory of the radio unit, whereby the implementation thereof becomes simple. The battery types and the corresponding voltage limits can alternatively be fed via the keyboard of the radio telephone set (e.g. of the user part of a hand phone), or afterwards via a separate external device.

According to the method of the invention a radio telephone which simplifies the manufacture of radio phones is provided. In addition, the maintenance becomes simpler and it is easier for the maintenance personnel to learn to know the set, because the number of different assemblies decrease.

## Claims

1. A radio unit for a radio telephone set, wherein said radio unit is alternatively connectable with at least two different disconnectable phone modules,
the radio unit being provided with at least one current input connection (12; 13) for connecting to a phone module,
the current input connection (12; 13) having a line (s1; s2) for receiving a signal from the phone module,
the radio unit having function affecting means for affecting the function of the radio unit according to the signal received from the connected phone module,
**characterized** in that
the line (s1; s2) is an identification line for connecting with a corresponding identification line of the phone module for receiving an identification signal (S1; S2) identifying the type of the phone module and the current supply unit (21; 31 - 34) thereof,
the function affecting means comprises a control element for automatically adjusting on basis of the identification signal (S1; S2) selected operating parameters of the radio unit, the adjustments being predetermined in the radio unit and being associated with the type of the phone module (21; 31 - 34) and its current supply unit.

2. A radio unit according to Claim 1, **characterized** in that
an additional current supply connection (12; 13), provided with an identification input (sl; s2) is arranged to the radio unit, whereby a phone module provided with an external power supply (31-34) is coupled to the radio unit over one connection (13), or a phone element (21) provided with an internal power supply (22) is coupled over the other connection (12).

3. A radio unit according to claim 1 or 2, **characterized** in that
the radio unit is provided with an A/D converter (11) for processing the signals of the identification inputs (s1; s2) the said signals thereafter being conducted to a microprocessor based control element.

## Patentansprüche

1. Funkeinheit für ein Funktelefongerät, die alternativ mit mindestens zwei verschiedenen trennbaren Telefonmodulen verbindbar ist, mit
mindestens einem Stromeingabeanschluß (12;13) zur Verbindung mit einem Telefonmodul, wobei der Stromeingabeanschluß (12;13) eine Leitung (s1;s2) zum Empfang eines Signals vom Telefonmodul aufweist; und
Funktions-Beeinflussungsmitteln, um die Funktion der Funkeinheit gemäß dem empfangenen Signal vom verbundenen Telefonmodul zu beeinflussen;
**dadurch gekennzeichnet**, daß
die Leitung (s1;s2) eine Identifikationsleitung zur Verbindung mit einer korrespondierenden Identifikationsleitung des Telefonmoduls ist, um ein Identifikationssignal (S1, S2) zu empfangen, das den Typ des Telefonmoduls und dessen Stromversorgungseinheit (21;31-34) identifiziert; und
die Funktions-Beeinflussungsmittel ein Steuerelement zur automatischen Einstellung ausgewählter Betriebsparameter der Funkeinheit auf Basis des Identifikationssignals (S1;S2) enthalten, wobei die Einstellungen in der Funkeinheit vorbestimmt und mit dem Typ des Telefonmoduls (21;31-34) und dessen Stromversorgungseinheit assoziiert sind.

2. Funkeinheit nach Anspruch 1, **dadurch gekennzeichnet**, daß an der Funkeinheit ein zusätzlicher Stromversorgungsanschluß (12, 13) mit einem Identifikationseingang (s1;s2) angeordnet ist, wobei ein mit einer externen Leistungsversorgung (31-34) versehenes Telefonmodul über den einen Anschluß (13) oder ein mit einer internen Leistungsversorgung (22) versehenes Telefonelement (21) über den anderen Anschluß (12) mit der Funkeinheit gekoppelt ist.

3. Funkeinheit nach Anspruch 1 oder 2, **dadurch gekennzeichnet**, daß die Funkeinheit mit einem A/D-Wandler (11) zur Verarbeitung der Signale der Identifikationseingänge (s1;s2) versehen ist, wobei die Signale danach einem auf einem Mikroprozessor basierenden Steuerelement zugeleitet werden.

## Revendications

1. Unité radio destinée à un appareil de radiotéléphone, dans lequel ladite unité radio peut être connectée en variante à au moins deux modules téléphoniques déconnectables différents,
l'unité radio étant munie d'au moins une connexion d'entrée de courant (12 ; 13) destinée à la connecter à un module téléphonique,
la connexion d'entrée de courant (12 ; 13) comportant une ligne (s1 ; s2) destinée à recevoir un signal provenant du module téléphonique,
l'unité radio comportant un moyen d'influence sur le fonctionnement, destiné à influer sur le fonctionnement de l'unité radio en fonction du signal reçu à partir du module téléphonique connecté,
caractérisée en ce que
la ligne (s1 ; s2) est une ligne d'identification destinée à être connectée à une ligne d'identification correspondante du module téléphonique afin de recevoir un signal d'identification (S1 ; S2) identifiant le type du module téléphonique et le bloc d'alimentation en courant (21 ; 31 à 34) de celui-ci,
le moyen d'influence sur le fonctionnement comprend un élément de commande destiné à ajuster automatiquement, sur la base du signal d'identification (S1 ; S2) des paramètres de fonctionnement sélectionnés de l'unité radio, les ajustements étant prédéterminés dans l'unité radio et étant associés au type du module téléphonique (21 ; 31 à 34) et à son bloc d'alimentation en courant.

2. Unité radio selon la revendication 1, caractérisée en ce que
une connexion d'alimentation en courant supplémentaire (12 ; 13), munie d'une entrée d'identification (s1 ; s2) est disposée sur l'unité radio, grâce à quoi un module téléphonique muni d'une alimentation externe (31 à 34) est relié à l'unité radio sur une connexion (13), ou bien un élément téléphonique (21) muni d'une alimentation interne (22) est relié sur l'autre connexion (12).

3. Unité radio selon la revendication 1 ou 2, caractérisée en ce que
l'unité radio est munie d'un convertisseur analogique/numérique (11) destiné à traiter les signaux des entrées d'identification (s1 ; s2), lesdits signaux étant ensuite acheminés vers un élément de commande à base de microprocesseur.
